**Europäisches Patentamt**

**European Patent Office**

**Office européen des brevets**

(11) Veröffentlichungsnummer: **0 500 058 A2**

# EUROPÄISCHE PATENTANMELDUNG

(21) Anmeldenummer: **92102698.5**

(22) Anmeldetag: **18.02.92**

(51) Int. Cl.⁵: **F25D 23/08**, B60J 10/08, E06B 7/22

(30) Priorität: **22.02.91 DE 4105660**

(43) Veröffentlichungstag der Anmeldung: **26.08.92 Patentblatt 92/35**

(84) Benannte Vertragsstaaten: **AT BE CH DK ES FR GB GR IT LI LU MC NL PT SE**

(71) Anmelder: **Karosseriefabrik VOLL GmbH Tiefe Gasse 11-21 W-8700 Würzburg-Heidingsfeld(DE)**

(72) Erfinder: **Kes, Peter, Dr.-Ing. Im Grund 19**

**W-8700 Würzburg-Oberdürrbach(DE)**
Erfinder: **Dyba, Uwe, Dipl.-Ing. Hans-Sachs-Strasse 82 W-8706 Höchberg(DE)**
Erfinder: **Hofmann, Günter Maingasse 176 W-8701 Frickenhausen(DE)**

(74) Vertreter: **Staeger, Sigurd, Dipl.-Ing. et al Patentanwälte Dipl.-Ing. S. Staeger Dipl.-Ing. Dipl.-Wirtsch.-Ing. R. Sperling Müllerstrasse 31 W-8000 München 5(DE)**

(54) **Dichtungsanordnung zwischen zwei verschwenkbaren Türflügeln bei Kühleinrichtungen, insbesondere Kühlfahrzeugen.**

(57) Bei einer Dichtungsanordnung zwischen zwei verschwenkbaren Türflügeln bei Kühleinrichtungen, insbesondere Kühlfahrzeugen mit an einer Stirnkante eines Türflügels angebrachten federnden Dichtungslippen und einem den Türspalt von außen abdeckenden Dichtungslappen sind die die Dichtungslippen tragende Fläche des einen Türflügels in einem Winkel von 2 - 15°, vorzugsweise 4 - 8°, zur Türebene angebracht und verläuft die gegenüberliegende Fläche des anderen Türflügels parallel zur eben genannten Fläche.

FIG. 1

Die Erfindung bezieht sich auf eine Dichtungsanordnung zwischen zwei verschwenkbaren Türflügeln bei Kühleinrichtungen, insbesondere Kühlfahrzeugen mit an einer Stirnkante eines Türflügels angebrachten federnden Dichtungslippen und einem den Türspalt von außen abdeckenden Dichtungslappen.

Kühleinrichtungen, seien es Kühlanlagen oder vor allem Kühlfahrzeuge, weisen an sich Doppeltüren auf, die zur Vermeidung von Wärmebrücken an ihren Rändern entsprechend abgedichtet werden müssen. Hierbei reichen einfache Dichtungseinrichtungen nicht aus, insbesondere dann nicht, wenn die Wandungen der Kühleinrichtungen und die Türflügel in Sandwich-Bauweise hergestellt sind. In diesem Fall muß die Dichtungseinrichtung sich auf die gesamte Tiefe des Sandwich-Grundkörpers erstrecken. Hierbei sind Wandstärken von 6 - 10 cm üblich.

Der Türspalt sowie die Räume im Gelenkbereich des Türflügels werden durch mehrere Dichtungslippen abgedichtet. Diese Dichtungslippen sind jeweils an einer Platte oder einem U-förmigen Halter angebracht, wobei sich die Befestigungsebene der Dichtungslippen senkrecht zur Türebene erstreckt.

Es hat sich nun herausgestellt, daß bei einer derartigen Anordnung der Dichtungslippen im Türspalt das Öffnen der Türflügel aufgrund der Tatsache erschwert wird, weil die Dichtungslippen unmittelbar nach dem Öffnen des Türverschlusses, z.B. eines Drehstangenverschlusses zunächst der Öffnungsbewegung einen größeren Widerstand leisten. Dieser Widerstand wird erst gebrochen, wenn die Türflügel z.B. um 8 - 9 cm geöffnet sind; in diesem Fall geben die zusammengedrückten Dichtungslippen die beiden Türflügel vollständig frei.

Der Erfindung liegt die Aufgabe zugrunde, eine besondere Dichtungsanordnung für dicke Türen zu schaffen, welche bei sehr guter Dichtungswirkung ein leichteres Öffnen der Türflügel gestattet.

Die Aufgabe wird dadurch gelöst, daß erfindungsgemäß die die Dichtungslippen tragende Fläche des einen Türflügels in einem Winkel von 2 - 15°, vorzugsweise 4 - 8°, zur Türebene angebracht sind und daß die gegenüberliegende Fläche des anderen Türflügels parallel zur eben genannten Fläche verläuft.

Auf diese Weise wird erreicht, daß trotz besonders guter Dichtungseigenschaften ein leichtes Öffnen der Türflügel möglich ist; die Dichtungsanordnung bildet einen guten Abschluß und auch einen guten Kantenschutz bei einer Ausbildung der Türflügel in Sandwich-Bauweise.

Nach einer bevorzugten Ausführungsform der Erfindung sind die Dichtungslippen an einem an der Stirnkante angebrachten annähernd im Querschnitt dreieckiger Halter vorgesehen. Bei einer derartigen Ausbildung der Dichtungsanordnung kann der Türflügel z.B. in Sandwich-Bauweise gerade abgeschnitten werden. Dies gilt besonders auch für den Fall, daß der andere Türflügel an seiner Stirnkante mit einem annähernd dreieckförmigen Stützelement versehen ist.

Wenn die Türflügel mit einem Drehstangenverschluß versehen sind, können die Dichtungslippen nach Betätigung zum Öffnen der Tür außer Eingriff gebracht sein. Bei Betätigen eines derartigen Drehstangenverschlusses öffnet sich gewöhnlich selbsttätig die Tür um etwa 2 cm. Diese Öffnungsbewegung reicht aus, die sich aus der Federwirkung der Dichtungslippen im geschlossenen Zustand der Türflügel ergebende Spannung im wesentlichen aufzuheben, was durch die Neigung der Befestigungsvorrichtung für die Dichtungslippen bedingt ist. Danach sind bereits die Dichtungslippen praktisch außer Eingriff, so daß sich die Türflügel leicht öffnen lassen.

Nach einer bevorzugten Ausführungsform der Erfindung bestehen der Halter und gegebenenfalls das Stützelement sowie die die Türflügel umgreifenden Befestigungsstege des Halters und gegebenenfalls des Stützelements aus hartem, sowie die Dichtungslippen aus demselben Material, jedoch mit einem geringeren Weichheitsgrad. Es kann PVC-Material vorgesehen sein.

Um gegebenenfalls Gewicht einzusparen, sind vorzugsweise der Halter und gegebenenfalls das Stützelement mit porösem Kernmaterial ausgefüllt. Auch ist es möglich, daß die freien Ränder der Befestigungsstege und der den Türspalt überbrückende Bereich des Dichtungslappens aus Weichmaterial bestehen.

Auf der Zeichnung ist eine beispielsweise Ausführungsform der Neuerung dargestellt; sie wird nachfolgend näher beschrieben. Es zeigt:

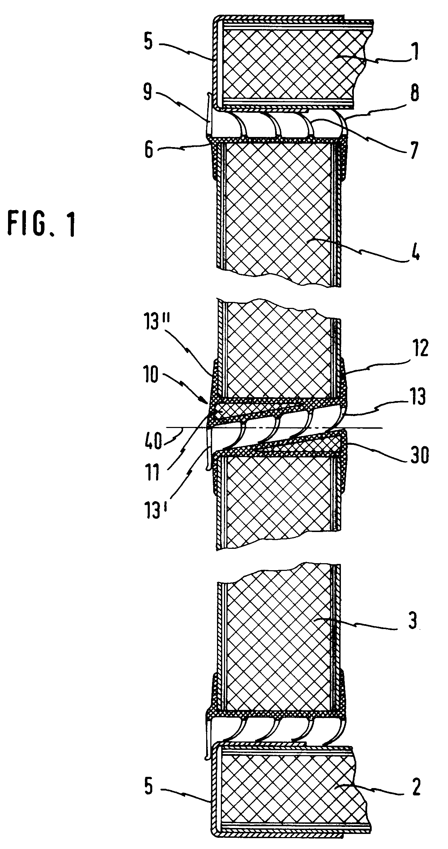

Fig. 1     einen Querschnitt in teils schematisierter Darstellung durch den Heckbereich eines Kühlfahrzeuges und

Fig. 2     zwei Teile der Dichtungsanordnung in stark vergrößertem Maßstab und in auseinandergezogener Form.

Der Heckbereich eines Kühlfahrzeuges weist eine linke Seitenwand 1, eine rechte Seitenwand 2, einen rechten Türflügel 3 und einen linken Türflügel 4 auf.

Die Stärke der Seitenwände 1 und 2 des in Sandwich-Bauweise hergestellten Grundkörpers beträgt etwa 6 cm. Die Seitenwände 1 und 2 sind durch ein U-förmiges Eckportal 5 abgeschlossen, welches die metallischen Außenseiten der beiden Seitenwände an ihren freien Enden umfaßt.

Im Gelenkbereich der linken Hecktür und der linken Seitenwand ist eine Dichtungsanordnung vorgesehen, die aus einem U-förmigen Halter 6,drei gleich langen Dichtungslippen 7 und einer weiteren Dichtungslippe 8 mit etwas größerer Länge bestehen. Am Halter 6 ist ferner ein Dichtungslappen 9 vorgesehen, welcher den Spalt zwischen der Kante des Türflügels 4 einerseits des Heckportals 5 und andererseits der Wandung der Seitenwand 1 überbrückt.

Auf der gegenüberliegenden Seite, d.h. also zwischen der rechten Hecktür 3 und der Seitenwand 2 ist eine spiegelbildgleiche Anordnung vorgesehen.

Im Türspalt zwischen den beiden Türflügeln 3 und 4 ist die nachfolgend beschriebene Dichtungsanordnung vorgesehen.

Am linken Türflügel 4, der ebenfalls in Sandwich-Bauweise hergestellt ist und eine Stärke von ca. 8,5 - 9 cm aufweist, ist ein Halter 10 angebracht, der annähernd dreieckförmig ausgebildet ist und mit einem porösen Kernmaterial 11 ausgefüllt ist. Der Halter 10 weist Befestigungsstege 12,13" auf, welche die Stirnkante des gerade abgeschnittenen Sandwich-Körpers des Türflügels 4 umfaßt und einen Dichtungslappen 13' aufweist, der auf der Außenseite der Türflügel 3 und 4 den Türspalt abschließt.

Während der Halter 10 annähernd in einer Stärke von 3 mm das poröse Kernmaterial 11 umfaßt, sind an seiner zum Türflügel 3 weisenden Seite vier gleichförmige Dichtungslippen 13' angebracht, welche aus einem PVC-Weichmaterial bestehen; auch der Dichtungslappen 13 besteht aus porösem PVC-Material.

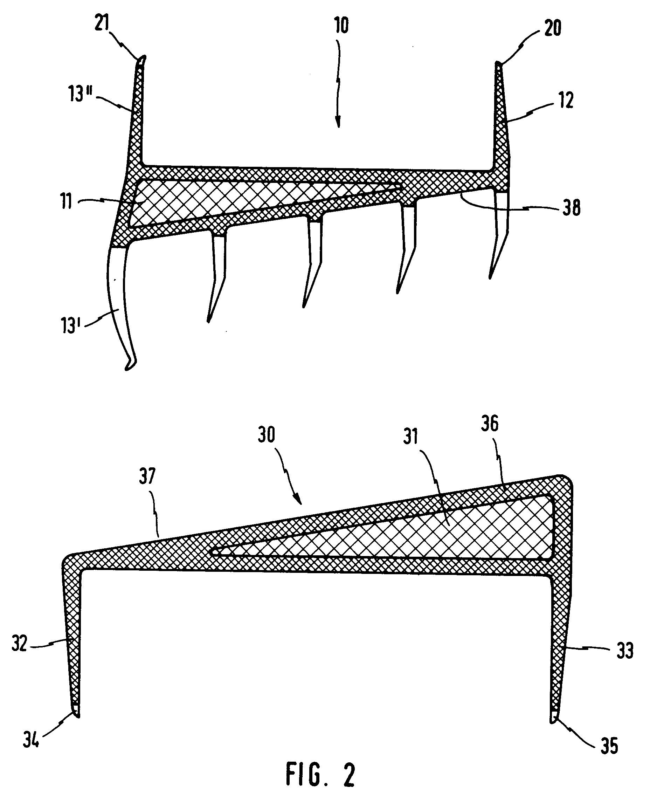

Wie aus Fig. 2 ersichtlich ist, sind die freien Ränder der Befestigungsstege 12,13" mit streifenförmigen Kanten 20, 21 versehen, die ebenfalls aus PVC-Weichmaterial hergestellt sind.

Der im unteren Teil von Fig. 2 dargestellte Stützkörper 30 weist annähernd die gleiche Form auf wie der Halter 10; er ist jedoch in vergrößertem Maßstab hergestellt; er weist ebenfalls wie der Halter 10 eine lichte Weite von 8,5 cm zur Aufnahme des Sandwich-Grundkörpers des Türflügels 3 auf.

Auch das Stützelement 30 ist dreieckförmig ausgebildet und weist einen porösen Kern 31 auf und hat Befestigungsstege 32, 33, an deren Kanten Weich-PVC-Abschnitte 34 und 35 angebracht sind.

Das eine Hart-PVC-Schicht 36 in einer Stärke von 3 mm aufweisende Stützelement weist eine Oberfläche 37 auf, welche parallel zur Oberfläche 38 des Halters 10 verläuft.

Den Winkel, den die beiden Flächen 38 und 37 zur Mittellinie 40 des Türspaltes zwischen den Türflügeln 3 und 4 aufweisen, beträgt ca. 8°. Diese Neigung oder Schrägfläche ist so gewählt, daß bei einem Betätigen des nicht gezeigten Drehstangenverschlusses an der Außenseite der beiden Türflügel 3 und 4 die Türflügel eine Relativbewegung zueinander in der Größenordnung von 2 cm (beim Öffnen) durchführen, so daß der Angriff der Dichtungslippen nach dieser Öffnungsbewegung entfällt,
so daß die Dichtungslippen sich von der Fläche 37 lösen. Dennoch wird eine ausgezeichnete Dichtungswirkung erzielt.

**Patentansprüche**

1. Dichtungsanordnung zwischen zwei verschwenkbaren Türflügeln bei Kühleinrichtungen, insbesondere Kühlfahrzeugen mit an einer Stirnkante eines Türflügels angebrachten federnden Dichtungslippen und einem den Türspalt von außen abdeckenden Dichtungslappen, dadurch gekennzeichnet, daß die die Dichtungslippen tragende Fläche des einen Türflügels in einem Winkel von 2 - 15°, vorzugsweise 4 - 8°, zur Türebene angebracht sind und daß die gegenüberliegende Fläche des anderen Türflügels parallel zur eben genannten Fläche verläuft.

2. Dichtungsanordnung nach Anspruch 1, dadurch gekennzeichnet, daß die Dichtungslippen an einem an der Stirnkante angebrachten annähernd im Querschnitt dreieckigen Halter vorgesehen sind.

3. Dichtungsanordnung nach Anspruch 1 oder 2, dadurch gekennzeichnet, daß der andere Türflügel an seiner Stirnkante mit einem annähernd dreieckförmigen Stützelement versehen ist.

4. Dichtungsanordnung nach einem der Ansprüche 1 bis 3, wobei die Türflügel mit einem Drehstangenverschluß versehen sind, dadurch gekennzeichnet, daß die Dichtungslippen nach einer Betätigung zum Öffnen der Tür außer Eingriff gebracht sind.

5. Dichtungsanordnung nach einem der Ansprüche 2 bis 4, dadurch gekennzeichnet, daß der Halter und gegebenenfalls das Stützelement und die die Türflügel umgreifenden Befestigungsstege des Halters und gegebenenfalls des Stützelements sowie die Dichtungslippen aus demselben Material, jedoch mit einem geringeren Weichheitsgrad bestehen.

6. Dichtungsanordnung nach Anspruch 5, dadurch gekennzeichnet, daß PVC-Material vorgesehen ist.

7. Dichtungsanordnung nach einem der Ansprüche 2 bis 6, dadurch gekennzeichnet, daß der Halter und gegebenenfalls das Stützelement mit porösem Kernmaterial ausgefüllt sind.

8. Dichtungsanordnung nach einem der Ansprüche 2 bis 7, dadurch gekennzeichnet, daß die freien Ränder der Befestigungsstege und der den Türspalt überbrückende Bereich des Dichtungslappen aus Weichmaterial bestehen.

FIG. 1

FIG. 2